# EUROPEAN PATENT APPLICATION

(11) **EP 1 355 302 A2**
(43) Date of publication of application: **22.10.2003**
(21) Application number: 03252395.3
(22) Date of filing: 15.04.2003
(51) Int. Cl.: G11B 7/09

(54) **Tilt detection device including a light-shielding member of light at both sides in radial direction of the optical disk**

(30) Priority: 18.04.2002 JP 2002115818
(71) Applicant: Ricoh Company Ltd., Tokyo 143-8555 (JP)
(72) Inventor: Ohno, Takehide, Yokohama-shi, Kanagawa (JP)
(74) Representative: Lamb, Martin John Carstairs

(57) **Abstract**

A light-emitting element (40a; 50a) emits a light toward an optical disk (1). A plurality of light-receiving elements (40b; 50b) receives the light reflected from the optical disk (1). A light-shielding member (40d; 50d) is provided between the optical disk (1) and at least one of the light-emitting element (40a; 50a) and the light-receiving elements (40b; 50b) so as to shield parts of the light at both sides in a radial direction of the optical disk (1). A tilt of the optical disk (1) is detected according to an intensity distribution of the light on the light-receiving elements (40b; 50b).

## Description

### BACKGROUND OF THE INVENTION

### 1. Field of the Invention

The present invention generally relates to a tilt detection device, an optical pickup and an optical disk device, and more particularly, to a tilt detection device applied to a storage device and so forth, which are computer peripherals using an optical disk as a storage medium, so as to detect a tilt of the optical disk, and an optical pickup and an optical disk device including the tilt detection device.

### 2. Description of the Related Art

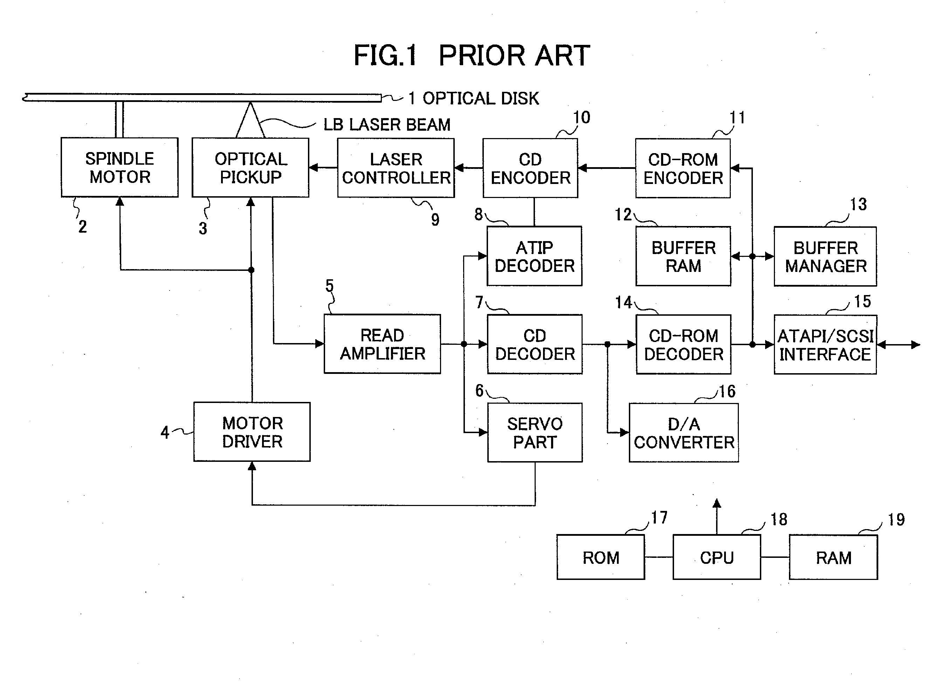

Recently, optical disks have been used as recording media for recording a large amount of information. Such optical disks have been generally represented by read-only disks, such as a music CD (Compact Disc), and a CD-ROM on which various programs are recorded. Recently, however, CDs, such as a CD-R and a CD-E on which information can be written (recorded) have been widespread. The CD-R (CD-Recordable) is a writable (recordable) CD, and more specifically, is a CD on which information can be written once (thus, also referred to as CD-Write Once). The CD-E (CD-Erasable) is a CD on which information can be written more than once (also referred to as CD-RW: CD-Rewritable). Further, a DVD (Digital Versatile Disk) also has become prevalent. The DVD has a same diameter as the CD-ROM, and has a larger capacity than the CD-ROM. Information is recorded/reproduced to/from an optical disk, such as the CD-R, the CD-E or the DVD, by an optical disk device as shown in FIG.1.

FIG.1 is a block diagram showing a main configuration of the optical disk device. As shown in FIG.1, the configuration involves an optical disk 1, a spindle motor 2, an optical pickup 3, a motor driver 4, a read amplifier 5, a servo part 6, a CD decoder 7, an ATIP decoder 8, a laser controller 9, a CD encoder 10, a CD-ROM encoder 11, a buffer RAM 12, a buffer manager 13, a CD-ROM decoder 14, an ATAPI/SCSI interface 15, a D/A converter 16, a ROM 17, a CPU 18, and a RAM 19.

Besides, arrows shown in FIG.1 indicate main directions in which data is transferred. In addition, although the CPU 18 controls each of the elements shown in FIG.1, FIG.1 shows the CPU 18 only with a thick-lined arrow to avoid complicated lines indicating connections with the above-mentioned elements.

The optical disk 1 is rotationally driven by the spindle motor 2. The spindle motor 2 is controlled by the motor driver 4 and the servo part 6 so that a linear velocity becomes constant. This linear velocity can be varied by degrees.

The optical pickup 3 incorporates a semiconductor laser, optical systems, a focus actuator, a track actuator, a light-receiving element, and a position sensor, which are not shown in FIG.1. A laser beam LB emitted from the semiconductor laser is projected on the optical disk 1 via the optical systems. Additionally, the optical pickup 3 can be moved in a sledge direction by a seek motor. The focus actuator, the track actuator and the seek motor are controlled by the motor driver 4 and the servo part 6 according to signals obtained from the light-receiving element and the position sensor so that a spot of the laser beam LB is located at a target position on the optical disk 1.

Upon reading data, a reproduction signal obtained by the optical pickup 3 is amplified and digitized by the read amplifier 5, and thereafter is supplied to the CD decoder 7. The digitized data is demodulated according to an EFM (Eight to Fourteen Modulation) in the CD decoder 7. Specifically, recorded data is subjected, in units of eight bits, to the EFM so as to be converted from eight bits to fourteen bits, and three coupling bits are added thereto so as to make a total of 17 bits. In this course, the coupling bits are added so that numbers of "1" and "0" thitherto become equal on average. This process is referred to as "restraint of DC component" whereby a slice level variation of the DC-cut reproduction signal is suppressed.

The demodulated data is de-interleaved and is subjected to an error correction. Subsequently, this data is supplied to the CD-ROM decoder 14, and is further subjected to an error correction for the purpose of enhancing a reliability of the data. The data subjected to the error correction twice as above is temporarily stored in the buffer RAM 12 by the buffer manager 13. When the stored data is accumulated so as to form sector data, the sector data is transferred to a host computer (not shown in the figure) at one time via the ATAPI/SCSI interface 15. In a case of music data, the data output from the CD decoder 7 is supplied to the D/A converter 16, and is taken out as analog audio output signal.

On the other hand, upon recording data, data transmitted from the host computer via the ATAPI/SCSI interface 15 is temporarily stored in the buffer RAM 12 by the buffer manager 13. When the stored data is accumulated to a certain amount in the buffer RAM 12, a recording operation is started. Prior to the start of the recording operation, the laser spot must be located at a start position of writing data. This position is obtained by a wobble signal engraved beforehand on the optical disk 1 by a wobbling track.

The wobble signal includes absolute time information called ATIP. This information is extracted by the ATIP decoder 8. A synchronizing signal generated by the ATIP decoder 8 is supplied to the CD encoder 10 so as to enable data to be written to an accurate position. The data stored in the buffer RAM 12 is subjected to processes of adding an error correction code and interleaving in the CD-ROM encoder 11 and the CD encoder 10, and is recorded on the optical disk 1 via the laser controller 9 and the optical pickup 3.

Besides, EFM modulated data drives the semiconductor laser as a bit stream at a channel bit rate of 4.3218 Mbps (a normal speed). In this case, recording data constitutes an EFM frame in units of 588 channel bits. A channel clock means a clock at a frequency of the above-mentioned channel bits.

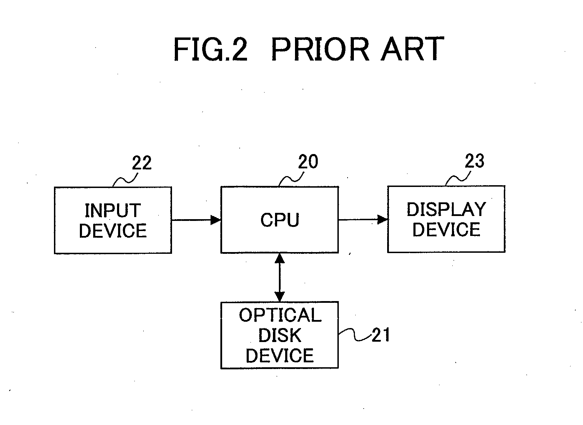

FIG.2 is a block diagram illustrating a main configuration of an information processing apparatus using the optical disk device shown in FIG.1. As shown in FIG.2, the configuration involves a CPU 20 of the information processing apparatus, an optical disk device 21, an input device 22 such as a keyboard or a mouse, and a display device 23 by means of a CRT or a liquid crystal. The CPU 20 and the optical disk device 21 are connected to each other via the ATAPI/SCSI interface 15 shown in FIG.1. According to an instruction from the input device 22, the CPU 20 conducts a reading/writing of information from/to the optical disk 1 of the optical disk device 21, and conducts a screen display on the display device 23 when necessary.

By the way, Japanese Laid-Open Patent Application No. 6-139604 describes an example of a conventional tilt detection device which uses light-emitting diodes (LEDs) as light-emitting elements, and bipartite photodiodes (bipartite PDs) as light-receiving elements.

According to such a tilt detection device, lights emitted from the LEDs are reflected on an optical disk, and are received by the bipartite PDs; a tilting of the optical disk shifts an intensity distribution of the lights on the bipartite PDs, thereby causing a difference between amounts of the lights received by the two PDs; according to the difference, the tilt of the optical disk can be detected.

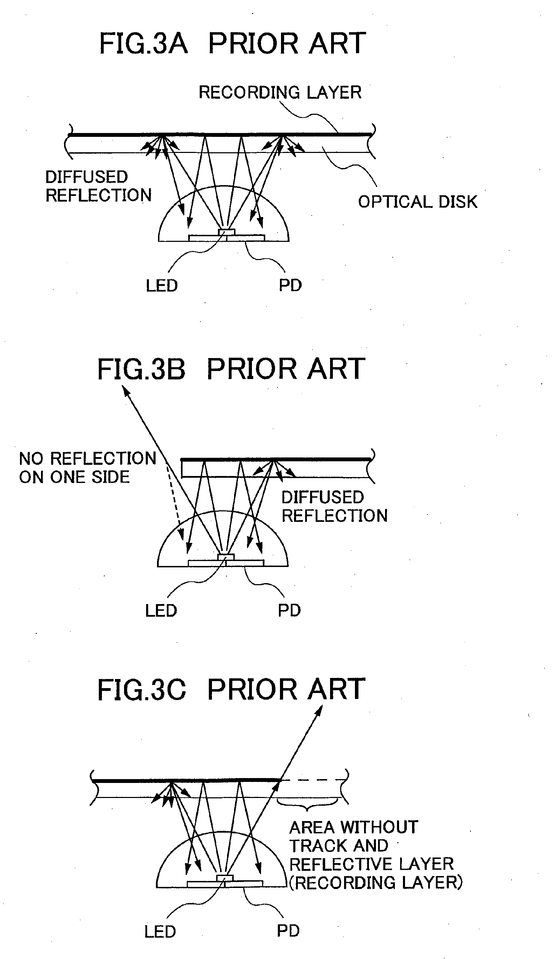

However, in reality, as shown in FIG.3A, the light produced from the LED is expansive so as to be projected on a wide range on the optical disk. Since the optical disk has a micro track thereon, the light projected on the wide range undergoes a diffused reflection; accordingly, not only light undergoing a regular reflection on the optical disk, but also light reflected from the wide range, enters the PDs. When an optical pickup accesses the vicinity of an innermost periphery or an outermost periphery of the optical disk, the light expanding on the wide range does not meet on either side (still outer side from the outermost periphery, or still inner side from the innermost periphery) of the optical disk, as shown in FIG.3B and FIG.3C, and does not undergo a diffused reflection so as to return to the PDs.

Therefore, in a case of a tilt detection device detecting a radial tilt of the optical disk, the amount of lights incident on the PD near an end portion of the optical disk reduces, thereby differentiating the amounts of lights incident on the two bipartite PDs so as to cause an offset therebetween, without an actual tilting of the optical disk; thus, an accurate tilt detection is inhibited. Besides, in a case of a tilt detection device detecting a tangential tilt of the optical disk, amounts of lights incident on the PDs vary, thereby possibly affecting a sensitivity of the tilt detection.

Further, without an accurate tilt detection, information cannot be recorded/reproduced accurately.

### SUMMARY OF THE INVENTION

It is a general object of the present invention to provide an improved and useful tilt detection device, an optical pickup and an optical disk device in which the above-mentioned problems are eliminated.

A more specific object of the present invention is to provide an a tilt detection device, an optical pickup and an optical disk device which can accurately detect a tilt of an optical disk even at an innermost portion or an outermost portion of the optical disk.

In order to achieve the above-mentioned objects, there is provided according to one aspect of the present invention a tilt detection device including a light-emitting element emitting a light, a plurality of light-receiving elements receiving the light reflected from an optical disk, and a light-shielding member provided between the optical disk and at least one of the light-emitting element and the light-receiving elements so as to shield parts of the light emitted from the light-emitting element and/or the light reflected from the optical disk, the parts being located at both. sides in a radial direction of the optical disk, wherein a tilt of the optical disk is detected according to an intensity distribution of the light on the light-receiving elements.

According to the present invention, the light emitted from the light-emitting element does not spread over a wide range on the optical disk in the radial direction; besides, light spread over a wide range on the optical disk in the radial direction undergoing a diffused reflection does not enter the light-receiving elements. Therefore, the tilt of the optical disk can be detected accurately even at an innermost portion or an outermost portion of the optical disk.

Other objects, features and advantages of the present invention will become more apparent from the following detailed description when read in conjunction with the accompanying drawings.

### BRIEF DESCRIPTION OF THE DRAWINGS

FIG.1 is a block diagram showing a main configuration of an optical disk device;
FIG.2 is a block diagram illustrating a main configuration of an information processing apparatus using the optical disk device shown in FIG.1;
FIG.3A to FIG.3C are explanatory views illustrating paths of laser light emitted from a conventional tilt detection device and paths of reflected light thereof;
FIG.4 is a block diagram illustrating a main configuration of an optical pickup;
FIG.5A is a perspective view of an optical pickup including a tilt detection device according to a first embodiment of the present invention;
FIG.5B is a front view of the optical pickup shown in FIG.5A as viewed in a radial direction of an optical disk;
FIG.6A and FIG.6B are diagrams illustrating an example of a radial tilt correcting part adopting a mechanism inclining the optical pickup;
FIG.7 is a perspective view of the tilt detection device according to the first embodiment of the present invention;
FIG.8 is a plan view of the tilt detection device as viewed in a direction indicated by an arrow A shown in FIG.7;
FIG.9 is an internal structure view of the tilt detection device as viewed in a direction indicated by an arrow B shown in FIG.7;
FIG.10 is a perspective view of a tilt detection device according to a second embodiment of the present invention;
FIG.11 is a plan view of the tilt detection device as viewed in a direction indicated by an arrow A shown in FIG.10; and
FIG.12 is an internal structure view of the tilt detection device as viewed in a direction indicated by an arrow B shown in FIG.10.

### DETAILED DESCRIPTION OF THE PREFERRED EMBODIMENTS

A description will now be given, with reference to the drawings, of embodiments according to the present invention. Elements in the following figures that are identical or equivalent to the elements shown in FIG.1 are referenced by the same reference marks, and will not be described in detail.

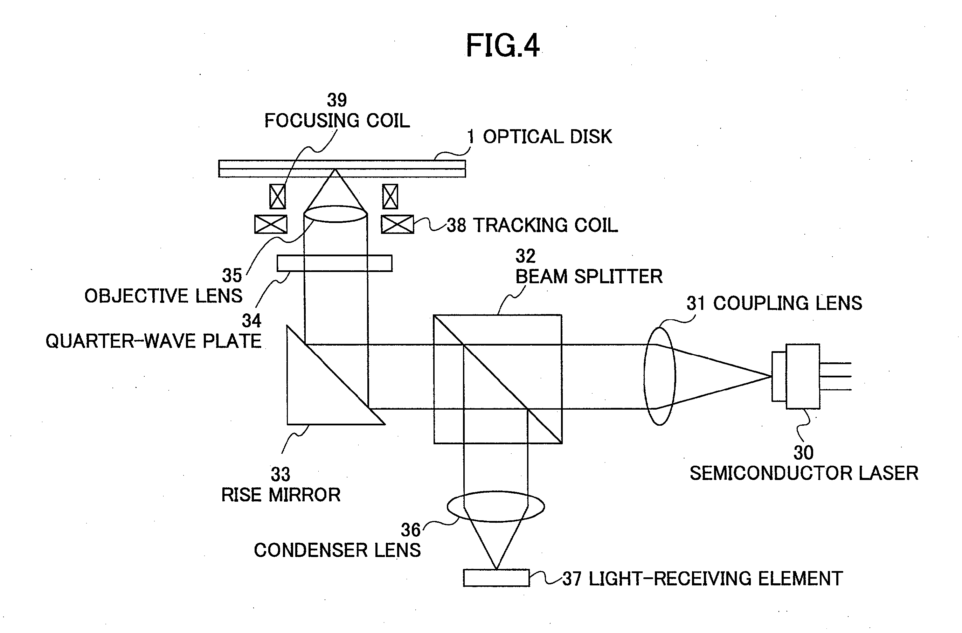

FIG.4 is a block diagram illustrating a main configuration of an optical pickup. As shown in FIG.4, the optical pickup includes a semiconductor laser 30, a coupling lens 31, a beam splitter 32, a rise mirror 33, a quarter-wave plate 34, an objective lens 35, a condenser lens 36, a light-receiving element 37, a tracking coil 38, and a focusing coil 39.

The light beam LB (a linearly-polarized light) emitted from the semiconductor laser 30 as a diffuse light is collimated by the coupling lens 31, and enters the beam splitter 32. The beam splitter 32 transmits or reflects the light through/on a laminated plane thereof according to a difference in directions of polarization of the light. Since the light beam LB incident on the beam splitter 32 is a collimated light, and oscillates in parallel with an incidence plane of the beam splitter 32,the light beam LB is transmitted through the beam splitter 32. The transmitted light beam LB changes direction on the rise mirror 33, and thereafter enters the quarter-wave plate 34. At the quarter-wave plate 34, the linearly-polarized light is converted into a circularly-polarized light. Thereafter, the light beam LB enters the objective lens 35. The light beam LB incident on the objective lens 35 is concentrated on a recording surface of the optical disk 1. The light reflected from the recording surface reenters the objective lens 35 and the quarter-wave plate 34. In this course, the circularly-polarized light is reconverted into the linearly-polarized light, which is different from the light originally entering the quarter-wave plate 34 by 90 degrees in phase so as to oscillate perpendicularly. This light is reflected by the beam splitter 32 in a direction perpendicular to the incidence direction. Subsequently, the light is concentrated by the condenser lens 36, and thereafter is received by the light-receiving element 37. Then, an amount of the light received by the light-receiving element 37 is converted into an electric signal, thereby reproducing information recorded on the optical disk 1. Besides, the light-receiving element 37 is divided, and according to an amount of the light received by each of the divided light-receiving elements, a tracking error signal and a focusing error signal are generated. Then, according to these signals, electric current is applied to the tracking coil 38 and the focusing coil 39 so as to perform a tracking servo and a focusing servo.

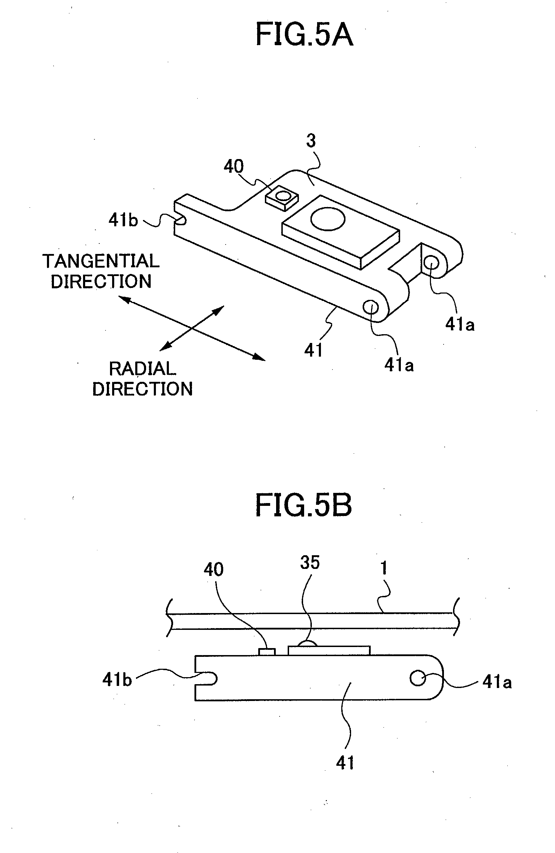

FIG.5A and FIG.5B are diagrams illustrating a structure of the optical pickup including a tilt detection device according to a first embodiment of the present invention. Specifically, FIG.5A is a perspective view of the optical pickup, and FIG.5B is a front view of the optical pickup shown in FIG.5A as viewed in a radial direction of the optical disk. As shown in FIG.5A and FIG.5B, the optical pickup 3 comprises a tilt detection device 40 and a housing 41 that is an exterior packaging of the optical pickup 3. The optical pickup 3 includes the elements shown in FIG.4 mounted on the housing 41. The optical pickup 3 is supported by two parallel shafts (not shown in the figure) so as to be movable in the radial direction of the optical disk 1. An axle bearing 41a is provided on one side part of the housing 41, and a U-shaped portion 41b is provided on the other side part of the housing 41. One of the two parallel shafts is inserted into the axle bearing 41a, and the other shaft is engaged with the U-shaped portion 41b. The objective lens 35 is provided outwardly on an upper surface of the housing 41, i.e., on a surface facing the optical disk 1.

Besides, since the optical disk 1 has a high density, the laser spot on the optical disk 1 is concentrated narrowly; therefor, a numerical aperture of the objective lens 35 is increased. With this structure, an increase in inclination of an optical axis of the objective lens 35 to the recording surface of the optical disk 1 results in a large aberration, exerting adverse influence on a recording quality and a reproducing quality of an information signal. To prevent this influence, the tilt detection device 40 detecting a tilt of the optical disk 1 is mounted on the surface of the housing 41 facing the optical disk 1.

According to the tilt detected by this tilt detection device 40, the tilt is corrected by a tilt correcting part so that excellent recording/reproduction can be performed to the optical disk 1. For example, a mechanism inclining the optical pickup 3, a mechanism inclining the objective lens 35, an optical part to correct aberration caused by the tilt within the optical pickup 3, and so forth may be used as the tilt correcting part.

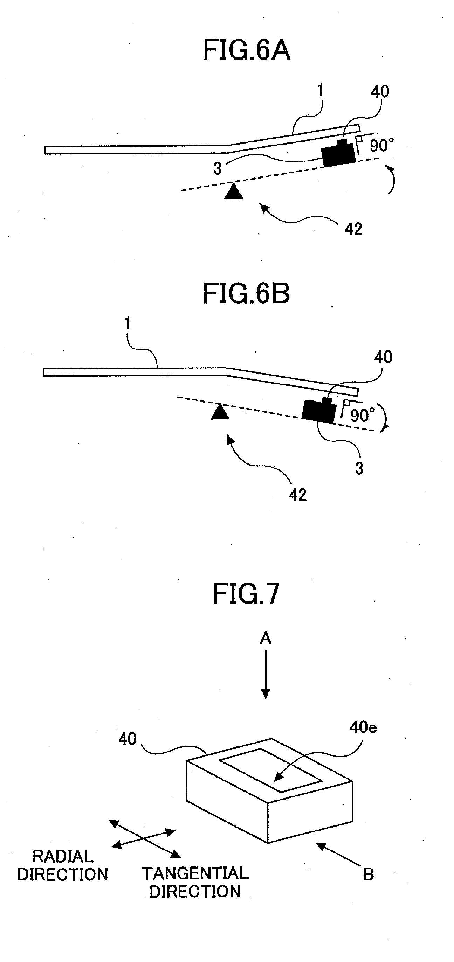

FIG.6A and FIG.6B are diagrams illustrating an example of a radial tilt correcting part 42 adopting the mechanism inclining the optical pickup 3. The optical pickup 3 and a driving mechanism for moving the optical pickup 3 are placed on a same base. This base is provided on the optical disk device rotatably so as to move at least up and down with respect to the radial direction of the optical disk 1. Further, the optical disk device comprises a driving mechanism for rotating the base. The driving mechanism is controlled to rotate the base precisely according to the tilt detected by the tilt detection device 40 so as to incline the optical axis of the objective lens 35 so that an angle of the optical axis of the objective lens 35 to the surface of the optical disk 1 maintains 90 degrees. Specifically, as shown in FIG.6A, when the optical disk 1 is bent upwards, the base is rotated upwards; as shown in FIG.6B, when the optical disk 1 is bent downwards, the base is rotated downwards; thereby, an angle of the laser beam LB is corrected so that the laser beam LB is always projected perpendicularly to the surface of the optical disk 1. Besides, the mechanism shown in FIG.6A and FIG.6B is driven especially upon performing a recording/reproduction with respect to a DVD.

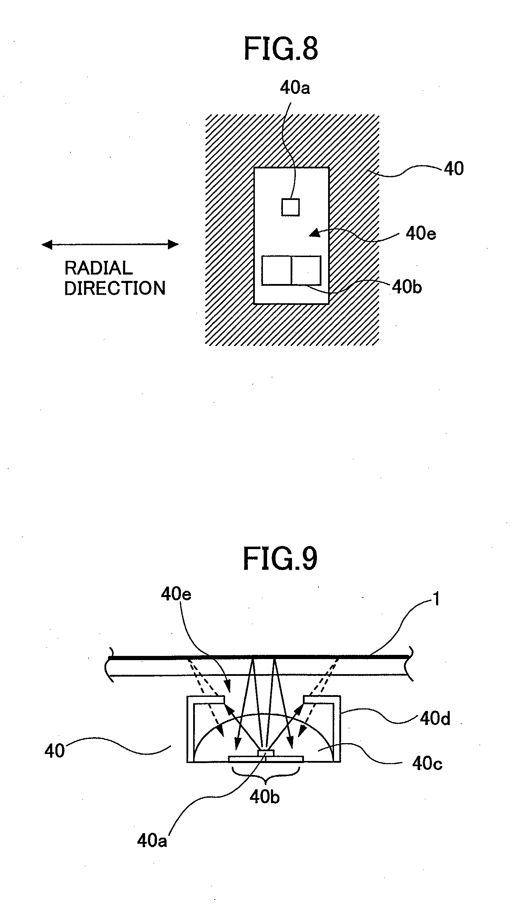

FIG.7 is a perspective view of the tilt detection device 40. FIG.8 is a plan view of the tilt detection device 40 as viewed in a direction indicated by an arrow A shown in FIG.7. FIG.9 is an internal structure view of the tilt detection device 40 as viewed in a direction indicated by an arrow B shown in FIG.7.

As shown in FIG.7, an opening 40e is formed in an upper surface of an exterior packaging (a light-shielding cover 40d mentioned hereinafter) of the tilt detection device 40. The laser beam LB comes in and out via this opening 40e. As shown in FIG.8, the tilt detection device 40 includes an LED 40a as a light-emitting element, and a bipartite PD 40b. The LED 40a and the bipartite PD 40b are arranged in parallel on a substrate. A division line of the bipartite PD 40b is perpendicular to the radial direction so that two PDs (light-receiving elements) composing the bipartite PD 40b are arranged in the radial direction. Accordingly, by comparing amounts of light received by the two PDs, a radial tilt of the optical disk 1 can be detected. Additionally, the LED 40a and the bipartite PD 40b are sealed by a translucent resin 40c. The light-shielding cover 40d forming the exterior packaging of the tilt detection device 40 is mounted outside the translucent resin 40c. Besides, as shown in FIG.9, the opening 40e is formed in the light-shielding cover 40d at a part opposing the LED 40a and the bipartite PD 40b. This opening 40e is rectangular, with two opposing sides being parallel with the radial direction and the other two opposing sides being parallel with a tangential direction of the optical disk 1. The division line of the bipartite PD 40b is located at the center of the two sides parallel with the tangential direction.

The light-shielding cover 40d is formed of a material, such as a black resin or a metal sheet, which does not transmit light emitted from the LED 40a. In addition, the light-shielding cover 40d does not necessarily need to be provided as a light-shielding member; instead, a light-shielding paint, such as a black paint, may be applied on a surface of the resin 40c sealing the LED 40a and the bipartite PD 40b.

The light emitted from the LED 40a is a diffuse light. As shown in FIG.9, part of the light emitted from the LED 40a which does not pass through the opening 40e is shielded by the light-shielding cover 40d. The light emitted from the LED 40a does not spread over a wide range on the optical disk 1 in the radial direction. Besides, only part of the light reflected from the optical disk 1 which passes through the opening 40e enters the bipartite PD 40b, and light undergoing a diffused reflection on a wide range of the optical disk 1 is shielded by the light-shielding cover 40d.

According to the above-described structure, even when the optical pickup 3 is moved in the radial direction of the optical disk 1 so that the tilt detection device 40 is located in the vicinity of an outer end or an inner portion without a track and a reflective surface, of the optical disk 1, the amounts of light incident on the bipartite PD 40b are not differentiated so as to cause an offset therebetween; thus, the radial tilt can be detected accurately. Besides, the accurate detection of the tilt improves the precision of the tilt correction, thereby enabling information to be recorded/reproduced accurately to/from the optical disk.

Besides, in the above-described first embodiment, the opening 40e has the form of a rectangle. However, the form of the opening 40e is not limited to the rectangle, and may be other form that restricts the opening in the radial direction; for example, lines at the edges of the opening on both sides of the LED 40a in the radial direction do not need to be parallel with the tangential direction, but may be curves, such as circular arcs. At this point, for the purpose of causing the reflected light to stably enter the two PDs composing the bipartite PD 40b, the two lines at the edges of the opening are preferred to be symmetrical about the division line of the bipartite PD 40b.

Further, the two sides parallel with the radial direction are not necessary in the opening 40e, and the shielding of light may be realized by separately fixing light-shielding covers divided in the radial direction by bonding and so forth.

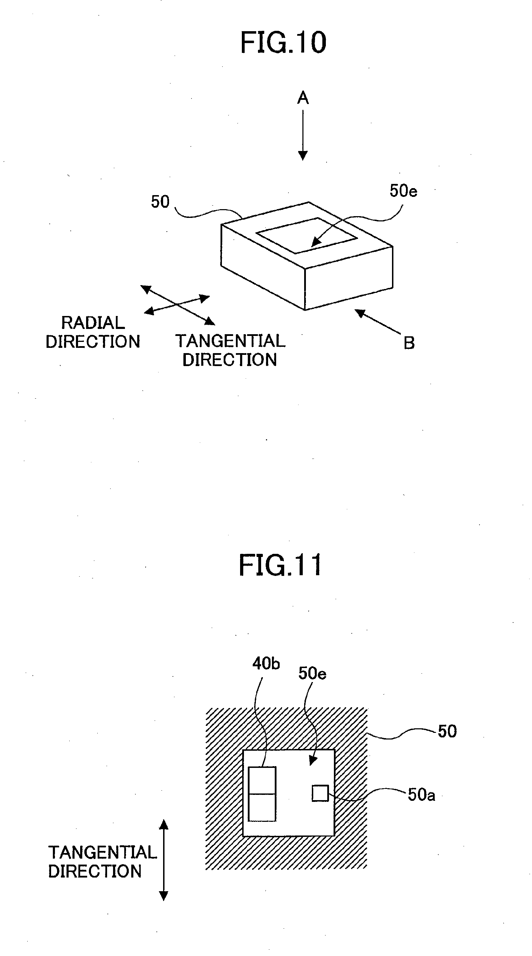

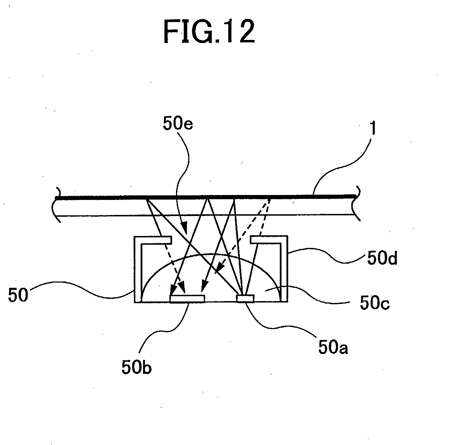

FIG.10 is a perspective view of a tilt detection device 50 according to a second embodiment of the present invention. FIG.11 is a plan view of the tilt detection device 50 as viewed in a direction indicated by an arrow A shown in FIG.10. FIG.12 is an internal structure view of the tilt detection device 50 as viewed in a direction indicated by an arrow B shown in FIG.10.

As shown in FIG.10, an opening 50e is formed in an upper surface of an exterior packaging (a light-shielding cover 50d mentioned hereinafter) of the tilt detection device 50. The laser beam LB comes in and out via this opening 50e. As shown in FIG.11, the tilt detection device 50 includes an LED 50a as a light-emitting element, and a bipartite PD 50b. The LED 50a and the bipartite PD 50b are arranged in parallel on a substrate. A division line of the bipartite PD 50b is perpendicular to the tangential direction so that two PDs (light-receiving elements) composing the bipartite PD 50b are arranged in the tangential direction. Accordingly, by comparing amounts of light received by the two PDs, a tangential tilt of the optical disk 1 can be detected. Additionally, the LED 50a and the bipartite PD 50b are sealed by a translucent resin 50c. The light-shielding cover 50d forming the exterior packaging of the tilt detection device 50 is mounted outside the translucent resin 50c. Besides, as shown in FIG.12, the opening 50e is formed in the light-shielding cover 50d at a part opposing the LED 50a and the bipartite PD 50b. This opening 50e is rectangular, with two opposing sides being parallel with the radial direction and the other two opposing sides being parallel with the tangential direction. The division line of the bipartite PD 50b is located at the center of the two sides parallel with the radial direction.

The light-shielding cover 50d is formed of the same material as the light-shielding cover 40d shown in FIG.9. Besides, as in the first embodiment, a light-shielding paint, such as a black paint, may be applied on a surface of the resin 50c.

Light emitted from the LED 50a is a diffuse light. As shown in FIG.12, part of the light emitted from the LED 50a which does not pass through the opening 50e is shielded by the light-shielding cover 50d. The light emitted from the LED 50a does not spread over a wide range on the optical disk 1 in the radial direction. Besides, only part of the light reflected from the optical disk 1 which passes through the opening 50e enters the bipartite PD 50b, and light undergoing a diffused reflection on a wide range of the optical disk 1 is shielded by the light-shielding cover 50d.

According to the above-described structure, even when the optical pickup 3 is moved in the radial direction of the optical disk 1 so that the tilt detection device 40 is located in the vicinity of an outer end or an inner portion without a track and a reflective surface, of the optical disk 1, a sum of the amounts of light incident on the bipartite PD 40b does not vary. Therefore, the sensitivity of the tilt detection does not fluctuate; thus, the tilt can be detected accurately.

Besides, also in the above-described second embodiment, the opening 50e has the form of a rectangle. However, the form of the opening 50e is not limited to the rectangle, and may be other form that restricts the opening in the radial direction; for example, the'lines at the edges of the opening may be curves, such as circular arcs. At this point, for the purpose of causing the reflected light to stably enter the two PDs composing the bipartite PD 50b, the form of the opening is preferred to be symmetrical about the division line of the bipartite PD 50b.

The present invention is not limited to the specifically disclosed embodiments, and variations and modifications may be made without departing from the scope of the present invention.

The present application is based on Japanese priority application No. 2002-115818 filed on April 18, 2002, the entire contents of which are hereby incorporated by reference.

## Claims

1. A tilt detection device (40; 50) comprising:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-emitting element (40a; 50a) and said optical disk (1) so as to shield parts of the light emitted from said light-emitting element (40a; 50a), the parts being located at both sides in a radial direction of said optical disk (1).

2. A tilt detection device (40; 50) comprising:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-receiving elements (40b; 50b) and said optical disk (1) so as to shield parts of the light reflected from said optical disk (1), the parts being located at both sides in a radial direction of said optical disk (1).

3. A tilt detection device (40; 50) comprising:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said optical disk (1) and both of said light-emitting element (40a; 50a) and said light-receiving elements (40b; 50b) so as to shield parts of the light emitted from said light-emitting element (40a; 50a) and the light reflected from said optical disk (1), the parts being located at both sides in a radial direction of said optical disk (1),

4. An optical pickup (3) comprising:
a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-emitting element (40a; 50a) and said optical disk (1) so as to shield parts of the light emitted from said light-emitting element (40a; 50a), the parts being located at both sides in a radial direction of said optical disk (1).

5. An optical pickup (3) comprising:
a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-receiving elements (40b; 50b) and said optical disk (1) so as to shield parts of the light reflected from said optical disk (1), the parts being located at both sides in a radial direction of said optical disk (1).

6. An optical pickup (3) comprising:
a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said optical disk (1) and both of said light-emitting element (40a; 50a) and said light-receiving elements (40b; 50b) so as to shield parts of the light emitted from said light-emitting element (40a; 50a) and the light reflected from said optical disk (1), the parts being located at both sides in a radial direction of said optical disk (1).

7. An optical disk device comprising:
an optical pickup (3) including a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-emitting element (40a; 50a) and said optical disk (1) so as to shield parts of the light emitted from said light-emitting element (40a; 50a), the parts being located at both sides in a radial direction of said optical disk (1).

8. An optical disk device comprising:
an optical pickup (3) including a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b),
**characterized in that**:
a light-shielding member (40d; 50d) is provided between said light-receiving elements (40b; 50b) and said optical disk (1) so as to shield parts of the light reflected from said optical disk (1), the parts being located at both sides in a radial direction of said optical disk (1).

9. An optical disk device comprising:
an optical pickup (3) including a tilt detection device (40; 50) including:
a light-emitting element (40a; 50a) emitting a light; and
a plurality of light-receiving elements (40b; 50b) receiving the light reflected from an optical disk (1),
wherein a tilt of said optical disk (1) is detected according to an intensity distribution of the light on said light-receiving elements (40b; 50b).
**characterized in that**:
a light-shielding member (40d; 50d) is provided between said optical disk (1) and both of said light-emitting element (40a; 50a) and said light-receiving elements (40b; 50b) so as to shield parts of the light emitted from said light-emitting element (40a; 50a) and the light reflected from said optical disk (1), the parts being located at both sides in a radial direction of said optical disk (1).

10. A method for detecting a tilt of an optical disk (1), **characterized by** the steps of:
emitting a light to said optical disk (1);
shielding parts of the light emitted to said optical disk (1), the parts being located at both sides in a radial direction of said optical disk (1);
receiving the light reflected from said optical disk (1); and
detecting the tilt of said optical disk (1) according to an intensity distribution of the light received by the step of receiving.

11. A method for detecting a tilt of an optical disk (1), **characterized by** the steps of:
emitting a light to said optical disk (1);
receiving the light reflected from said optical disk (1);
shielding parts of the light reflected from said optical disk (1), the parts being located at both sides in a radial direction of said optical disk (1); and
detecting the tilt of said optical disk (1) according to an intensity distribution of the light received by the step of receiving.

12. A method for detecting a tilt of an optical disk (1), **characterized by** the steps of:
emitting a light to said optical disk (1);
shielding parts of the light emitted to said optical disk (1), the parts being located at both sides in a radial direction of said optical disk (1);
receiving the light reflected from said optical disk (1);
shielding parts of the light reflected from said optical disk (1), the parts being located at both sides in a radial direction of said optical disk (1); and
detecting the tilt of said optical disk (1) according to an intensity distribution of the light received by the step of receiving.
